(19) Europäisches Patentamt
European Patent Office
Office européen des brevets

(11) **EP 4 134 411 B1**

(12) **EUROPEAN PATENT SPECIFICATION**

(45) Date of publication and mention
of the grant of the patent:
**11.02.2026 Bulletin 2026/07**

(21) Application number: **21785622.8**

(22) Date of filing: **18.03.2021**

(51) International Patent Classification (IPC):
*C10B 57/06* (2006.01)     *C22B 1/00* (2006.01)
*B01J 20/26* (2006.01)     *B65G 53/52* (2006.01)
*B65G 69/20* (2006.01)     *C10B 57/08* (2006.01)
*B65G 43/08* (2006.01)     *B65G 53/62* (2006.01)
*B65G 53/66* (2006.01)

(52) Cooperative Patent Classification (CPC):
**C10B 57/06; B65G 53/526; B65G 69/20;**
**C10B 57/08;** B65G 43/08; B65G 53/62;
B65G 53/66; C22B 1/00

(86) International application number:
**PCT/JP2021/011022**

(87) International publication number:
**WO 2021/205836 (14.10.2021 Gazette 2021/41)**

(54) **METHOD FOR MODIFYING MINERAL RAW MATERIAL**

VERFAHREN ZUR MODIFIZIERUNG VON MINERALISCHEM ROHMATERIAL

PROCÉDÉ DE MODIFICATION D'UNE MATIÈRE PREMIÈRE MINÉRALE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **09.04.2020 JP 2020070604**

(43) Date of publication of application:
**15.02.2023 Bulletin 2023/07**

(73) Proprietor: **Kurita Water Industries Ltd.**
**Tokyo 164-0001 (JP)**

(72) Inventors:
• **TANIYAMA, Natsumi**
**Tokyo 164-0001 (JP)**
• **KIKKAWA, Takashi**
**Tokyo 164-0001 (JP)**

(74) Representative: **TBK**
**Bavariaring 4-6**
**80336 München (DE)**

(56) References cited:
**JP-A- 2000 065 334     JP-A- 2013 245 382**
**JP-A- 2018 058 017     JP-A- 2018 058 017**
**JP-A- 2018 127 709     JP-A- 2019 137 909**
**JP-A- H0 953 128       JP-B2- 6 303 308**

• **MOISTTECH CORP: "IR-3000 Online NIR**
**Moisture Sensor", 30 September 2019**
**(2019-09-30), pages 1 - 3, XP093138946,**
**Retrieved from the Internet <URL:https://**
**vikacontrols.com.br/wp-content/uploads/**
**produtos/catalogos/moisttech/**
**Catalogo_-_Medidor-MoistTech-IR-3000.pdf>**
**[retrieved on 20240307]**

**Description**

Technical Field

The present invention relates to a method for modifying a mineral raw material, particularly a mineral raw material in a wet state.

Background Art

In an ironworks, a thermal power plant, or the like, usually, a mineral raw material is stacked outdoors in a raw material yard as a stock. The raw material mineral stacked outdoors in the raw material yard may include water sprinkled as a dustproof measure and rainwater and is likely to have a high moisture content.

The raw material mineral stacked outdoors in the raw material yard is conveyed from the raw material yard to storage equipment and equipment in which the mineral raw material is used, by changing belt conveyors. For example, when coal is supplied to a boiler of a thermal power plant, generally, coal is conveyed to the boiler by a series of lines in which after the changing of belt conveyors, the coal passes through a coal grinding machine and a bucket type conveyor.

Not only the raw material yard but also belt conveyor equipment is outdoors, and therefore coal is exposed to rain and is in a wetter state. Such coal is likely to adhere to the contact surfaces of treatment equipment such as piping that supplies coal to a boiler (coal supply pipe), belt conveyors, chutes, and hoppers, and further may tightly adhere thereto, resulting in clogging the piping and the like.

When such adhesion and clogging occur, it is necessary to stop the operation of the lines and remove the clogging coal and disassemble the equipment to eliminate the adhesion and the clogging. Therefore, the coal conveyance efficiency decreases, and further a situation in which power generation efficiency in a thermal power plant decreases also occurs.

For such problems, PTL1 proposes an adhesion and clogging prevention method in equipment for the conveyance of a wet mineral raw material by bringing a super absorbent polymer as a modifier into contact with the mineral raw material.

For a wet mineral raw material having a high moisture content stored in storage equipment, a phenomenon is observed in which during storage, the moisture included in the mineral raw material moves to the lower portion of the storage equipment, the moisture content of the mineral raw material in the lower portion increases further, and the mineral raw material in the lower portion is in the form of a slurry. This mineral raw material having an increased moisture content may leak from the storage equipment due to a decrease in friction force.

For such a problem, PTL2 proposes a method for preventing a wet mineral raw material from leaking from storage equipment, and/or a method for preventing water from leaking, by bringing a super absorbent polymer and/or a water-soluble polymer compound as a modifier into contact with the wet mineral raw material when storing the wet mineral raw material in the storage equipment

Another problem of a mineral raw material in a raw material yard or storage equipment is that as the amount of moisture becomes higher, the bulk density becomes lower, and the conveyance efficiency decreases, and therefore the productivity of industrial products using the mineral raw material decreases.

For such a problem, PTL3 proposes a method for improving the bulk density of coal for coke production characterized in that in a transport line for coal to be charged into a coke furnace, a bulk density improving agent is added as a modifier to coal ground so that a grain fraction having a grain diameter of 3 mm or less is 75% or more.

JP 2000-065334 A relates to uniform moistening of ash and to prevent ash adhering to an instrument through moistening supply water by providing a metering conveyor for measuring and supplying a supply amount, an infrared water sensor for measuring a water amount of ash carried by the metering conveyor, a moistening nozzle apparatus disposed in an ash throwing space between an outlet of the metering conveyor and an ash hopper of the ash melting furnace for injecting moistening water from the surrounding of ash thrown down, and a supply controller for injecting a predetermined amount of the moistening water from the moistening nozzle apparatus upon supplying ash from the metering conveyor to the ash hopper by judging the moistening supply water from the ash supply amount of the metering conveyor and a detected value of the infrared water sensor.

JP 6 303 308 B relates to a method for modifying a mineral raw material by adding a modifier to the mineral raw material, comprising steps of: measuring a moisture content and an amount of the mineral raw material to be conveyed, wherein the mineral raw material conveyed contains moisture; calculating an amount of the modifier to be added, based on the moisture content and the amount of the mineral raw material to be conveyed; and adding the modifier in the amount to be added, to the mineral raw material, wherei naddition of the modifier prevents at least any of adhesion of the mineral raw material to treatment equipment, clogging of the treatment equipment with the mineral raw material, ejection of the mineral raw material into the treatment equipment and out of the treatment equipment, and a decrease in bulk density of the mineral raw material. The method is for conveying coal, and comprises a step of applying a preparation, which contains one or more selected from the group consisting of dialkylsulfosuccinic acid and/or salt thereof, alkane sulfonic acid and/or salt thereof, polyoxyethylene alkyl ether sulfate and/or triethanolamine salt thereof and polyoxyalkylene alkyl ether, to the coal having 6-10 mass% adherent moisture content.

Citation List

Patent Literature

PTL1: JP 2018-58017 A
PTL2: JP 2018-127709 A
PTL3: JP 2010-77368 A
PTL4: JP 2000-065334 A
PTL5: JP 6 303308 B2

Summary of Invention

Technical Problem

So far, the amount of a modifier to be added has been determined based on only one moisture content of a mineral raw material in a piled state measured in any place. However, in a wet mineral raw material in a raw material yard or storage equipment, the moisture content differs between the surface layer and the interior and between the upper layer and the lower portion. Therefore, the amount of the modifier added may be insufficient, the adhesion of the mineral raw material in treatment equipment and the clogging of the treatment equipment with the mineral raw material are not sufficiently improved, and further the mineral raw material may be ejected into the treatment equipment and out of the treatment equipment.

In the hold of a bulk carrier, water is likely to accumulate at the bottom below the hatch, and the moisture content of a mineral raw material housed near the bottom is likely to increase. Therefore, when the concentration of a modifier to be added is determined based on the moisture content of the mineral raw material near the hatch cover at the initial stage of unloading, the amount of the modifier added is insufficient at the final stage of the unloading, and also in this case, as in the above, the adhesion of the mineral raw material in treatment equipment and the clogging of the treatment equipment with the mineral raw material are not eliminated, and the problems of ejection and the like described above also occur.

In order to improve the conveyance efficiency of a mineral raw material that has a high moisture content and is in a wet state and thus is in a low bulk density state, it is required to increase the bulk density of the mineral raw material conveyed, without variations.

For the problems as described above, it is an object of the present invention to provide a method for modifying a mineral raw material that prevents at least any of the adhesion of the mineral raw material to treatment equipment, the clogging of the treatment equipment with the mineral raw material, the ejection of the mineral raw material into the treatment equipment and out of the treatment equipment, and a decrease in the bulk density of the mineral raw material in order to efficiently convey the mineral raw material.

Solution to Problem

The present invention is based on the finding that as a method for modifying a mineral raw material, a mineral raw material can be preferably modified by adjusting the amount of a modifier to be added, based on the moisture content of the mineral raw material continuously measured.

Specifically, the present invention is defined by the appended claims.

Advantageous Effects of Invention

According to the method for modifying a mineral raw material according to the present invention, it is possible to effectively prevent the adhesion of the mineral raw material to treatment equipment, the clogging of the treatment equipment with the mineral raw material, the ejection of the mineral raw material into the treatment equipment and out of the treatment equipment, and a decrease in the bulk density of the mineral raw material.

Therefore, when the method of the present invention is used, a mineral raw material can be efficiently conveyed, and it is possible to provide a method for modifying a mineral raw material that can contribute to the improvement of the productivity of industrial products using the mineral raw material.

Brief Description of Drawings

[Fig. 1] Fig. 1 is a schematic diagram for explaining a method for modifying a mineral raw material according to the present invention.
[Fig. 2] Fig. 2 is a schematic diagram for explaining a method for modifying a mineral raw material according to the present invention.

Description of Embodiments

A method for modifying a mineral raw material according to the present invention will be described below.

"The prevention of the adhesion of a mineral raw material to treatment equipment" in the present invention is used in the sense of including not only cases where the mineral raw material does not adhere at all but also cases where even when the mineral raw material adheres partially, adhesion is sufficiently suppressed to the extent that the conveyance of the mineral raw material is not hindered.

The method for modifying a mineral raw material according to the present invention includes the steps of continuously measuring the moisture content and amount of the mineral raw material conveyed; calculating the amount of the modifier to be added, based on the moisture content and the amount conveyed; and adding the modifier in the amount to be added, to the mineral raw material.

When the method for modifying a mineral raw material according to the present invention has the steps, it is possible to prevent at least any of the adhesion of the mineral raw material to treatment equipment, the clogging of the treatment equipment with the mineral raw material, the ejection of the mineral raw material into the treatment equipment and out of the treatment equipment, and a decrease in the bulk density of the mineral raw material.

(Mineral Raw Material)

The type of the mineral raw material is coal or iron ore. These may be single or mixtures of two or more.

The shape, size, and the like of the mineral raw material are not particularly limited, but from the viewpoint of preventing clogging, one in a form likely to cause clogging, for example, one in the form of grains, a powder, or the like in which the grain diameter of one grain is 0.1 $\mu$m to 10 mm, is preferably applied.

In the present invention, the "mineral raw material" to which the modifier is to be added is a wet mineral raw material including moisture. The "wet mineral raw material" is a mineral raw material that is in a damp state and a moist state and can be conveyed by a belt conveyor. The moisture content of the wet mineral raw material cannot be unconditionally determined depending on the type and properties of the mineral raw material. For example, in the case of coal having a grain diameter of 0.1 $\mu$m to 10 mm, the moisture content is more than 10% by mass, preferably 12% by mass or more. For example, in the case of iron ore having a grain diameter of 0.1 $\mu$m to 10 mm, the moisture content is more than 9% by mass, preferably 11% by mass or more.

The source of the moisture in the mineral raw material is not particularly limited, and the moisture may be derived from the mineral raw material itself or may be water such as rain with which the mineral raw material comes into contact during conveyance and storage, and sprinkled water for dust prevention.

[Modifier]

The modifier is super absorbent polymers and surfactants. One of these may be used singly, or two or more of these may each be used singly, or these may be used as a mixture of two or more.

From the viewpoint of preventing the adhesion of the mineral raw material to treatment equipment, the clogging of the treatment equipment with the mineral raw material, and the ejection of the mineral raw material into the treatment equipment and out of the treatment equipment, the modifier preferably includes a super absorbent polymer.

From the viewpoint of the improvement of the bulk density of the mineral raw material, the modifier preferably includes a surfactant.

(Super absorbent polymer)

The super absorbent polymer in the present invention is "a resin that highly absorbs water and swells, is a hydrophilic substance having a crosslinked structure, and is characterized by absorbing water by contact with water and being difficult to separate from water even by the application of pressure once it absorbs water" defined in JIS K7223 (1996) and JIS K7224 (1996). That is, the super absorbent polymer in the present invention is a resin having a large amount of water absorbed and excellent in water retention properties.

When the super absorbent polymer is added and mixed into the wet mineral raw material, the water-soluble polymer compound absorbs at least some of the moisture in the mineral raw material. Thus, the moisture content of the surface of the mineral raw material is reduced, and on the contact surfaces of treatment equipment, the slidability of the mineral raw material improves, and the mineral raw material is less likely to adhere, and it is possible to prevent adhesion to the treatment equipment, the clogging of the treatment equipment, ejection into the treatment equipment and out of the treatment equipment, and the like. Adhesiveness to the contact surfaces of the treatment equipment should be suppressed, and the total amount of the moisture in the mineral raw material need not be absorbed by the super absorbent polymer.

The type of the super absorbent polymer may be either synthetic resin-based or natural product-derived and is not particularly limited. Examples thereof include poly(meth)acrylic acid, poly(meth)acrylates, poly(meth)acrylic acid esters, poly(meth)acrylamide, polyalkylenimines, polyoxyalkylenes, polymaleic acid, and copolymers including any of the monomers constituting these. In the present invention, "(meth)acryl" means acryl or methacryl.

Examples of the monomers constituting poly(meth)acrylates include sodium (meth)acrylate, potassium (meth) acrylate, and ammonium (meth)acrylate.

Examples of the monomers constituting poly(meth)acrylic acid esters include methyl (meth)acrylate, ethyl (meth)acrylate, n-propyl (meth)acrylate, n-butyl (meth)acrylate, isobutyl (meth)acrylate, hydroxyethyl (meth)acrylate, and 2-ethylhexyl (meth)acrylate.

Examples of the monomers constituting polyalkylenimines include ethylenimine and methylethylenimine.

Examples of the monomers constituting polyoxyalkylenes include ethylene oxide and propylene oxide.

Examples of other monomers constituting the copolymers include vinylsulfonic acid, styrenesulfonic acid, N-ethyl(meth)acrylamide, and vinylpyridine.

One super absorbent polymer may be used singly, or two or more super absorbent polymers may be used in combination. From the viewpoint of easy availability, high water absorption capacity, and the like, polyacrylic acid or sodium polyacrylate is preferably used, and sodium polyacrylate is particularly preferred.

The super absorbent polymer may be used in combination with other water-absorbing agents. Examples of other water-absorbing agents include silica gel, zeolite, and activated carbon.

For the properties of the super absorbent polymer, from the viewpoint of uniformly mixing it into the mineral raw material and the ease of handling and the like, the super absorbent polymer is preferably in the form of grains or a powder having a grain diameter equal to or less than that of the mineral raw material. For example, in the case of coal having a grain diameter of 0.1 $\mu$m to 2 mm, a super absorbent polymer preferably having a grain diameter of 10 to 1000 $\mu$m, more preferably 50 to 600 $\mu$m, is used. A dispersion in which a super absorbent polymer in the form of a liquid is dispersed in an organic solvent may be used, or a super absorbent polymer in the form of a liquid may be used. The organic solvent is not particularly limited, but a high boiling point solvent such as an aromatic organic solvent is preferably used.

The content of the super absorbent polymer in the active component of the modifier is preferably 5 to 100% by mass, more preferably 50 to 100% by mass, and further preferably 90 to 100% by mass from the viewpoint of efficiently conveying the mineral raw material.

(Surfactant)

As the surfactant, for example, an anionic surfactant such as a dialkylsulfosuccinic acid (the number of carbon atoms of the alkyl group is preferably 8 to 16) or a salt thereof (for example, a sodium salt, an ammonium salt, a potassium salt, or a triethanolamine salt), a polyoxyethylene alkyl ether sulfate, or a sodium alkanesulfonate, or a nonionic surfactant such as a polyoxyethylene (POE) addition polymer or a salt thereof can be used.

When the surfactant is added and mixed into the wet mineral raw material, the slidability of the mineral raw material improves, and the bulk density of the mineral raw material improves. The improvement of the bulk density can contribute to the improvement of the productivity of industrial products using the mineral raw material.

One surfactant may be used singly, or two or more surfactants may be used in combination. From the viewpoint of the improvement of the bulk density of the mineral raw material, an anionic surfactant is preferred, and a sodium alkanesulfonate is more preferred.

The content of the surfactant in the active component of the modifier is preferably 5 to 100% by mass, more preferably 10 to 50% by mass, and further preferably 20 to 30% by mass from the viewpoint of bulk density improvement.

[Treatment Equipment]

The treatment equipment in the present invention refers to treatment equipment in a conveyance line in which the mineral raw material is fed by predetermined lines, for example, from a mineral raw material storage place such as a raw material yard to equipment in which the mineral raw material is used, and also includes treatment equipment having the function of temporarily storing the mineral raw material, such as chutes, hoppers, and silos. The treatment equipment in the present invention is distinguished from transport by a ship, a truck, or the like, conveyance by a bucket, and the like.

In the present invention, the effect of preventing the adhesion of the mineral raw material, clogging with the mineral raw material, the ejection of the mineral raw material into the treatment equipment and out of the treatment equipment, and the like is obtained in places where inconveniences due to adhesion and clogging are likely to occur, of the treatment equipment, specifically, piping, belt conveyors, conveyor chains, chutes, hoppers, silos, coke furnaces, and the like.

The wet mineral raw material is likely to cause problems such as adhesion, clogging, and ejection in the treatment equipment, and when problems occur, it is necessary to stop the operation of the lines and then solve the problems, and time and effort are required.

In contrast to this, in the present invention, when the amount of the modifier to be added is calculated, and the modifier is added to the mineral raw material in the amount to be added, by the method described later, the slidability of the mineral raw material improves on the contact surfaces of treatment equipment, and adhesion, clogging, and ejection are prevented, and thus the mineral raw material can be efficiently conveyed without stopping the operation of the lines.

[Measuring Step]

The measuring step in the present invention is the step of continuously measuring the moisture content and amount of the mineral raw material conveyed.

In the present invention, continuously measuring means continually performing measurement, rather than only one measurement, and refers to, for example, performing the moisture content or amount of the mineral raw material conveyed, a plurality of times at particular intervals.

The intervals at which the moisture content is measured are not particularly limited and differ depending on the type and properties of the mineral raw material, the amount of the mineral raw material conveyed, and the like. When coal is used as the mineral raw material, and the amount conveyed is 1 to 20 t/min, the moisture content is preferably measured every 0.01 to 60 s.

The intervals at which the amount conveyed is measured are not particularly limited and differ depending on the type, properties, and conveyance rate of the mineral raw material, and the like. When coal is used as the mineral raw material, and the moisture content of coal is 5 to 25% by mass, the amount conveyed is preferably measured every 1 s to 1 min.

As the method for measuring the moisture content of the mineral raw material, measurement by a noncontact moisture meter is preferred from the viewpoint of continuously measuring the moisture content of the mineral raw material. Examples thereof include an infrared type, a microwave type, a neutron type, an electrical resistance type, and a capacitance type.

Among these, measurement by an infrared type in which the raw material is irradiated with infrared rays, and the reflected light intensity is measured is preferred from the viewpoint of easy installation and easy usability. For example, CM710e manufactured by NDC Technologies can be adopted.

The time required for the measurement of the moisture content of the mineral raw material is preferably 0.1 to 60 s, more preferably 1 to 10 s, from the viewpoint of productivity, adding the modifier in a suitable amount to be added corresponding to the moisture content of the mineral raw material, and the like.

Examples of the method for measuring the amount of the mineral raw material conveyed include load measuring apparatuses such as a load cell type and a Merrick type, and distance measuring apparatuses such as an optical type, a millimeter wave type, and an ultrasonic type.

For a load measuring apparatus, the amount conveyed is calculated from the mass value of the mineral raw material on a belt conveyor and the movement rate of the belt conveyor. For a distance measuring apparatus, a distance sensor is installed above a belt conveyor, and the amount conveyed is calculated from the difference between the distance from the distance sensor to the belt conveyor bottom and the distance from the distance sensor to the mineral raw material on the belt conveyor.

The time required for the measurement of the amount of the mineral raw material conveyed is preferably 0.1 to 60 s, more preferably 1 to 10 s, from the viewpoint of productivity, adding the modifier in a suitable amount to be added corresponding to the moisture content of the mineral raw material, and the like.

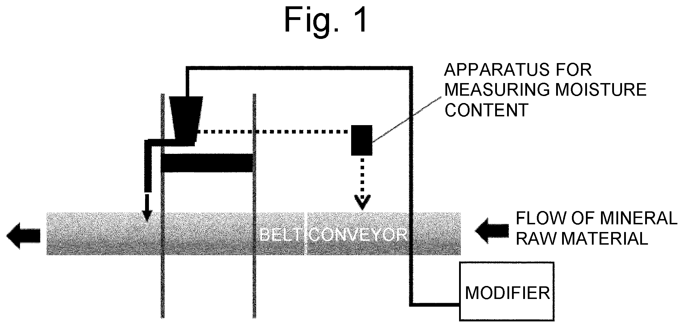

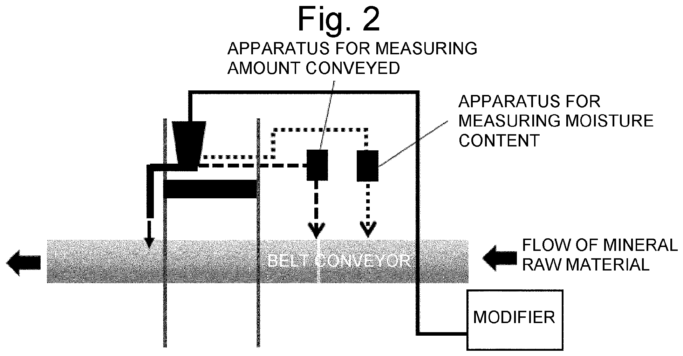

The positions at which the moisture content and amount of the mineral raw material conveyed are measured are on the upstream side from the position at which the modifier is added, in the conveyance lines shown in Fig. 1 in which the measurement of only the moisture content is performed and Fig. 2 in which the measurement of both the moisture content and the amount conveyed is performed. Apparatuses for measuring the moisture content and the amount conveyed are preferably installed near conveyance equipment such as a belt conveyor that conveys the mineral raw material to be measured.

In one aspect of the present invention, when the moisture content and the amount conveyed are measured, the measurement of the moisture content may be performed prior to the measurement of the amount conveyed, the measurement of the amount conveyed may be performed prior to the measurement of the moisture content, or the measurement of the moisture content and the amount conveyed may be simultaneously performed. When the mineral raw material is not conveyed, the moisture content need not be measured, and therefore the measurement of the amount conveyed is preferably performed prior to the measurement of the moisture content.

[Calculating Step]

The calculating step in the present invention is the step of calculating the amount of the modifier to be added, based on the measurement results of the moisture content and amount of the mineral raw material conveyed.

The amount of the modifier to be added differs depending on the type and properties of the mineral raw material, and the like. For example, in a case where the mineral raw material is coal, when the moisture content of coal is less than about 7% by mass, the amount of the modifier to be added is calculated as 0 regardless of the amount of the mineral raw material conveyed, since adhesion to treatment equipment, the clogging of the treatment equipment, and ejection into the treatment equipment and out of the treatment equipment are less likely to occur, and the bulk density is also relatively high. That is, excessive addition of the modifier is suppressed.

When the moisture content of coal is about 7% by mass or more, the addition of the modifier is necessary, and the amount of the modifier to be added is calculated based on a reference value that is a suitable amount to be added for the moisture content of the mineral raw material, previously obtained from simulation, a calibration curve, or the like, and the measurement result of the moisture content of coal. The amount of the modifier to be added increases as the moisture content of coal becomes higher, and the amount conveyed becomes larger.

By calculating the amount of the modifier to be added, based on the measurement results of the moisture content of the mineral raw material and the amount of the mineral raw material conveyed, and adding the modifier in the calculated amount to be added, in the adding step described later, it is possible to prevent the shortage of the modifier resulting in an insufficient modifying effect.

In the present invention, the amount of the modifier to be added is calculated based on the measurement results of the moisture content of the mineral raw material and the amount of the mineral raw material conveyed, and therefore excessive addition of the modifier can also be prevented, and the modifier cost can be reduced. When the reference value that is a suitable amount to be added for the moisture content of the mineral raw material, previously obtained from simulation, a calibration curve, or the like, and the measurement result of the moisture content differ greatly, it is possible to determine that the raw material is not present on the belt conveyor, and stop the addition of the modifier.

The calculating step is a step performed after the measuring step and is a step performed before the adding step described later.

[Adding Step]

The adding step in the present invention is the step of adding the modifier in the amount to be added calculated in the calculating step, to the mineral raw material. That is, the adding step in the present invention is the step of continuously adding the modifier to the mineral raw material while changing the amount to be added, according to the calculated amount of the modifier to be added.

The amount of the modifier to be added differs depending on the type and properties of the mineral raw material and is calculated from the moisture content of the mineral raw material and the amount of the mineral raw material conveyed. When the mineral raw material is coal having a grain diameter of 0.1 $\mu$m to 2 mm and a moisture content of 7% by mass or more, and the modifier includes a super absorbent polymer, the modifier is preferably added so that the concentration of the super absorbent polymer in the coal is 0.001 to 50% by mass, more preferably 0.005 to 5% by mass, and further preferably 0.05 to 0.5% by mass. By setting the amount to be added, in the above range, it is possible to prevent at least any of the adhesion of the mineral raw material to treatment equipment, the clogging of the treatment equipment with the mineral raw material, and the ejection of the mineral raw material into the treatment equipment and out of the treatment equipment.

When the mineral raw material is coal having a grain diameter of 0.1 $\mu$m to 2 mm and a moisture content of 7% by mass or more, and the modifier includes a surfactant, the modifier is preferably added so that the concentration of the surfactant in the coal is 0.001 to 50% by mass, more preferably 0.005 to 5% by mass, and further preferably 0.05 to 0.5% by mass. By setting the amount to be added, in the above range, it is possible to prevent a decrease in the bulk density of the mineral raw material.

When the mineral raw material is iron ore having a grain diameter of 0.1 $\mu$m to 2 mm and a moisture content of 10% by mass or more, and the modifier includes a super absorbent polymer, the modifier is preferably added so that the concentration of the super absorbent polymer in the iron ore is 0.001 to 50% by mass, more preferably 0.005 to 5% by mass, and further preferably 0.05 to 0.5% by mass. By setting the amount to be added, in the above range, it is possible to prevent at least any of the adhesion of the mineral raw material to treatment equipment, the clogging of the treatment equipment with the mineral raw material, and the ejection of the mineral raw material into the treatment equipment and out of the treatment equipment.

When the mineral raw material is iron ore having a grain diameter of 0.1 μm to 2 mm and a moisture content of 10% by mass or more, and the modifier includes a surfactant, the modifier is preferably added so that the concentration of the surfactant in the iron ore is 0.001 to 50% by mass, more preferably 0.005 to 5% by mass, and further preferably 0.05 to 0.5% by mass. By setting the amount to be added, in the above range, it is possible to prevent a decrease in the bulk density of the mineral raw material.

The position at which the modifier is added to the mineral raw material is not particularly limited as long as it is a position at which the modifier can be added after the measurement of the moisture content of the mineral raw material and the amount of the mineral raw material conveyed. The position at which the modifier is added to the mineral raw material may be in the course of the conveyance of the mineral raw material by a belt conveyor or the like or after the conveyance. From the viewpoint of adding the modifier in a suitable amount to be added, the position at which the modifier is added is preferably near the positions at which the moisture content and the amount conveyed are measured. Mixing action acts on the added modifier and the mineral raw material in a belt conveyor change portion, and therefore the modifier is preferably added at a position upstream from the belt conveyor change portion.

The method for adding the modifier to the mineral raw material is not particularly limited, but the modifier is preferably sprayed on the mineral raw material conveyed by a belt conveyor or the like from above the mineral raw material.

The modifier may be added in one place or may be added in two or more places.

When two or more components are used as the modifier, the components may be respectively added, or a mixture previously prepared and mixed may be added. After one component is added singly, a mixture previously prepared and mixed using two or more components may be added, or after a mixture previously prepared and mixed using two or more components is added, one component may be added singly.

For the timing of adding the modifier to the mineral raw material, it is preferred that the modifier is preferably added within 10 min, more preferably within 5 min, and further preferably within 1 min after the measurement of the moisture content of the mineral raw material because the moisture content may change in the course of the conveyance of the mineral raw material. It is preferred that the modifier can be added according to fluctuations in the conveyance content of the mineral raw material.

In the present invention, after the modifier is added to the mineral raw material, the mineral raw material and the modifier are preferably mixed.

The mixing method is not particularly limited, but it is preferred that a mixture in a state in which the mineral raw material and the modifier are uniformly mixed and in contact with each other is obtained. Examples of the mixing method include mixing in a belt conveyor change portion and mixing by a kneading machine or a heavy machine.

The mineral raw material and the modifier can also be mixed by adding the modifier into a predetermined container housing the mineral raw material, and stirring and mixing them.

The bulk density of the mineral raw material to which the modifier is added differs depending on the type and properties of the mineral raw material and is preferably more than 700 kg/m$^3$, more preferably more than 750 kg/m$^3$, from the viewpoint of contributing to the improvement of the productivity of industrial products using the mineral raw material.

Examples

The present invention will be specifically described below by Examples, but the present invention is not limited by the following Examples.

[Moisture Content Measurement]

The moisture content of a mineral raw material was calculated from the following formula by measuring the mass (A) for about 20 g of the mineral raw material, measuring the mass (B) after drying the mineral raw material by a dryer at 105°C for 2 h, and taking the amount of decrease (A - B) as the amount of moisture.

$$\text{Moisture content [\% by mass]} = (A - B)/A \times 100$$

[Adhesiveness Evaluation Test]

For the evaluation of adhesiveness, each of the samples prepared in the Examples and Comparative Examples was charged into the simulated hopper of a vibration test apparatus in which the simulated hopper (inverted truncated quadrangular pyramid in outer shape with charge port: 180 mm × 140 mm and discharge port: 30 mm × 60 mm; made of steel) was attached to the upper portion of an electric sieve "ANF-30" (manufactured by NITTO KAGAKU Co., Ltd.) instead of a sieve, and dropped into the receiver in the lower portion of the vibration test apparatus. The discharge time was measured, and whether the sample adhered to the simulated hopper or not was visually observed.

When the discharge time from the start of sample charge to the end of the dropping of the sample into the receiver in the lower portion of the vibration test apparatus was 10.0 s or less, the sample did not adhere to the simulated hopper after the test, and the discharge time was shortened compared with when no modifier was added, and therefore it was determined that the adhesion of the sample and clogging with the sample were prevented.

However, for cases where the sample contained a large amount of moisture, was muddy, and had high fluidity, and adhesion was seen in the upper portion of the simulated hopper, even if the discharge time was 10 s or less, it was determined that the obtained sample was not sufficiently modified.

[Bulk Density Evaluation Test]

500 g of each of the samples prepared in the Examples and the Comparative Examples was evenly and uniformly dropped and filled from the upper end of a cylindrical 1 L graduated cylinder (made of glass), and then the volume was measured, and the bulk density was calculated from the volume and the mass (500 g).

The bulk density was calculated from the following formula:

Bulk density (kg/m$^3$) = (sample mass/sample volume after 1 L graduated cylinder filling)

When the value of the bulk density of the sample was more than 695 kg/m$^3$, it was determined that the sample had sufficient bulk density.

(Example 1)

Coal (moisture content 10.2% by mass, grain diameter 10 mm or less) was used as a mineral raw material, and a super absorbent polymer "KURILINE S-200" (manufactured by Kurita Water Industries Ltd.; sodium polyacrylate) was added as a modifier so that the content was 0.05% by mass. They were uniformly stirred and mixed to prepare a sample. Then, the adhesiveness evaluation test of the sample was performed.

(Examples 2 to 5, Comparative Examples 1 to 3, and Reference Examples 1 to 3)

Samples were prepared with the moisture content of coal and the content of the modifier changed as shown in the following Table 1, and in the same manner as Example 1 except that, and the adhesiveness evaluation test was performed.

The results of the adhesiveness evaluation test of the Examples 1 to 5, Comparative Examples 1 to 3, and Reference Examples 1 to 3 are shown together in Table 1. For whether the sample adhered or not, cases where the sample adhered to the simulated hopper after the test were taken as B, and cases where the sample did not adhere were taken as A.

Table 1

| | Moisture content [% by mass] | Concentration of modifier (KURILINE S-200) contained [% by mass] | Discharge time [sec] | Whether sample adheres or not *1 |
|---|---|---|---|---|
| Comparative Example 1 | 10.2 | 0.00 | 19.90 | B |
| Example 1 | | 0.05 | 3.59 | A |
| Example 2 | | 0.10 | 1.76 | A |
| Example 3 | | 0.20 | 1.36 | A |
| Comparative Example 2 | 13.0 | 0.00 | 16.98 | B |
| Comparative Example 3 | | 0.10 | 40.05 | B |
| Example 4 | | 0.20 | 4.88 | A |
| Example 5 | | 0.30 | 1.60 | A |
| Reference Example 1 | 6.7 | 0.00 | 1.42 | A |
| Reference Example 2 | | 0.05 | 1.49 | A |

(continued)

|  | Moisture content [% by mass] | Concentration of modifier (KURILINE S-200) contained [% by mass] | Discharge time [sec] | Whether sample adheres or not *1 |
|---|---|---|---|---|
| Reference Example 3 |  | 0.10 | 1.35 | A |
| *1 B: the sample adheres, A: the sample does not adhere | | | | |

In Examples 1 to 5 in which the discharge time was 10 s or less, the sample did not adhere to the upper portion of the simulated hopper, and it was confirmed that adhesion was suppressed.

As seen from Reference Examples 1 to 3, it can be said that when the moisture content of coal is about 7% by mass, the adhesiveness is low regardless of whether a modifier is added or not, and a modifier need not be added.

In this manner, it can be said that in a case where the moisture content of coal is more than 7% by mass, by adding a suitable amount of a super absorbent polymer according to the moisture content, the adhesion of coal to the contact surfaces of equipment is suppressed, the slidability improves, and it is possible to prevent adhesion to treatment equipment, the clogging of the treatment equipment, and ejection into the treatment equipment and out of the treatment equipment.

(Examples 6 to 11 and Comparative Examples 4 to 9)

Samples were prepared in the same manner as Example 1 except that iron ore (moisture content 11.0% by mass, grain diameter 10 mm or less) was used instead of coal, and the amount of the super absorbent polymer added was changed as shown in the following Table 2. The adhesiveness evaluation test was performed.

The results of the adhesiveness evaluation test of the Examples 6 to 11 and Comparative Examples 4 to 9 are shown together in Table 2. For whether the sample adhered or not, cases where the sample adhered to the simulated hopper after the test were taken as B, and cases where the sample did not adhere were taken as A.

Table 2

|  | Moisture content [% by mass] | Concentration of modifier (KURILINE S-200) contained [% by mass] | Discharge time [sec] | Whether sample adheres or not *2 |
|---|---|---|---|---|
| Comparative Example 4 | 11.0 | 0.00 | 60.00 | B |
| Example 6 | | 0.05 | 1.44 | A |
| Example 7 | | 0.10 | 1.73 | A |
| Example 8 | | 0.20 | 1.75 | A |
| Comparative Example 5 | 14.0 | 0.00 | 7.32 | B |
| Comparative Example 6 | | 0.05 | 27.10 | B |
| Example 9 | | 0.10 | 1.89 | A |
| Example 10 | | 0.20 | 1.74 | A |
| Comparative Example 7 | 17.0 | 0.00 | 1.20 | B |
| Comparative Example 8 | | 0.05 | 5.09 | B |
| Comparative Example 9 | | 0.10 | 16.48 | B |
| Example 11 | | 0.20 | 1.89 | A |
| *2 B: the sample adheres, A: the sample does not adhere | | | | |

In Examples 6 to 11 in which the discharge time was 10 s or less, the sample did not adhere to the upper portion of the simulated hopper, and it was confirmed that adhesion was suppressed.

In Comparative Example 5, 7, and 8, the discharge time was 10 s or less, but the sample contained a large amount of moisture, was muddy, and had high fluidity, and adhesion was seen in the upper portion of the simulated hopper.

In this manner, it can be said that in a case where the moisture content of iron ore is about 11% by mass or more, by adding a suitable amount of a super absorbent polymer according to the moisture content, the adhesion of iron ore to the contact surfaces of equipment is suppressed, the slidability improves, and it is possible to prevent adhesion to treatment equipment, the clogging of the treatment equipment, and ejection into the treatment equipment and out of the treatment equipment.

(Example 12)

Coal (moisture content 10.5% by mass, grain diameter 10 mm or less) was used as a mineral raw material, and a coal bulk density improving agent "sodium alkanesulfonate" (manufactured by Kurita Water Industries Ltd.) was added as a modifier so that the content was 0.1% by mass. They were uniformly stirred and mixed to prepare a sample, and then the bulk density was calculated.

(Example 13, Comparative Examples 10 to 13, and Reference Examples 4 to 6)

Bulk density was calculated with the moisture content of coal and the content of the modifier changed as shown in the following Table 3, and in the same manner as Example 12 except that.

The results of the adhesiveness evaluation test of the Examples 12 and 13, Comparative Examples 10 to 13, and Reference Examples 4 to 6 are shown together in Table 2.

Table 3

|  | Moisture content [% by mass] | Concentration of modifier contained [% by mass] | Raw material mixture sample mass [g] | Volume [mL] | Bulk density [kg/m³] |
|---|---|---|---|---|---|
| Reference Example 4 | 9.0 | 0 | 500.09 | 710 | 704 |
| Reference Example 5 |  | 0.05 | 500.08 | 710 | 704 |
| Reference Example 6 |  | 0.1 | 500.14 | 695 | 720 |
| Comparative Example 10 | 10.5 | 0 | 500.28 | 740 | 676 |
| Comparative Example 11 |  | 0.05 | 500.13 | 720 | 695 |
| Example 12 |  | 0.1 | 500.12 | 690 | 725 |
| Comparative Example 12 | 12.0 | 0 | 500.02 | 755 | 662 |
| Comparative Example 13 |  | 0.05 | 500.22 | 730 | 685 |
| Example 13 |  | 0.1 | 500.23 | 710 | 705 |

In Examples 12 and 13, it was confirmed that by adding a surfactant as a modifier, one that had improved bulk density and could contribute to the improvement of the productivity of industrial products using the mineral raw material was obtained. In this manner, it can be said that by adding a surfactant as a modifier to coal having a moisture content of about 10.5% by mass or more, one that has improved bulk density and can contribute to the improvement of the productivity of industrial products using the mineral raw material is obtained.

As seen from Reference Examples 4 to 6, when the moisture content of coal is about 9% by mass, the value of bulk density is high even if no surfactant is added.

**Claims**

1.    A method for modifying a mineral raw material by adding a modifier to the mineral raw material, comprising steps of:

continuously measuring a moisture content and an amount of the mineral raw material conveyed, wherein the mineral raw material conveyed contains moisture;
calculating an amount of the modifier to be added, based on the moisture content and the amount of the mineral raw material conveyed; and
adding the modifier in the amount to be added, to the mineral raw material, wherein
addition of the modifier prevents at least any of adhesion of the mineral raw material to treatment equipment, clogging of the treatment equipment with the mineral raw material, ejection of the mineral raw material into the treatment equipment and out of the treatment equipment, and a decrease in bulk density of the mineral raw material, wherein
the mineral raw material is coal and the method comprises adding a surfactant as the modifier to coal having a moisture content of 10.5% by mass or more, or
the mineral raw material is iron ore and the method comprises adding a super absorbent polymer defined in JIS K7223 (1996) and JIS K7224 (1996) or a surfactant as the modifier to iron ore having a grain diameter of 0.1 $\mu$m to 2 mm and a moisture content of 10% by mass or more.

2. The method for modifying a mineral raw material according to claim 1, wherein the treatment equipment is at least any of piping, a belt conveyor, a conveyor chain, a chute, a hopper, a silo, and a coke furnace.

3. The method for modifying a mineral raw material according to any one of claims 1 to 2, wherein the super absorbent polymer is sodium polyacrylate.

4. The method for modifying a mineral raw material according to any one of claims 1 to 2, wherein the surfactant is an anionic surfactant.

**Patentansprüche**

1. Verfahren zum Modifizieren eines mineralischen Rohmaterials durch Zugabe eines Modifikators zu dem mineralischen Rohmaterial, umfasst die Schritte:

Kontinuierliches Messen eines Feuchtigkeitsgehalts und einer Menge des beförderten mineralischen Rohmaterials, wobei der beförderte mineralische Rohmaterial Feuchtigkeit enthält;
Berechnen einer Menge des hinzuzufügenden Modifikators auf der Grundlage des Feuchtigkeitsgehalts und der Menge des beförderten mineralischen Rohmaterials; und
Zugeben des Modifikators in der zuzuführenden Menge zu dem mineralischen Rohmaterial, wobei
das Zugeben des Modifikators zumindest eines von Anhaften des mineralischen Rohmaterials an der Behandlungsvorrichtung, Verstopfen der Behandlungsvorrichtung mit dem mineralischen Rohmaterial, Ausstoßen des mineralischen Rohmaterials in die Behandlungsvorrichtung hinein und aus der Behandlungsvorrichtung heraus und Verringerung der Schüttdichte des mineralischen Rohmaterials verhindert, wobei
das mineralische Rohmaterial Kohle ist und das Verfahren das Hinzugeben eines Tensids als Modifikator zu Kohle mit einem Feuchtigkeitsgehalt von 10,5 Massen-% oder mehr umfasst,
oder
das mineralische Rohmaterial Eisenerz ist und das Verfahren das Hinzugeben eines in JIS K7223 (1996) und JIS K7224 (1996) definierten superabsorbierenden Polymers oder eines Tensids als Modifikator zu Eisenerz mit einem Korndurchmesser von 0,1 $\mu$m bis 2 $\mu$m und einem Gehalt von 10 Massen-% oder mehr umfasst.

2. Verfahren zum Modifizieren eines mineralischen Rohmaterials nach Anspruch 1, wobei die Behandlungsvorrichtung mindestens eines aus einer Rohrleitung, einem Förderband, einer Förderkette, einer Rutsche, einem Trichter, einem Silo und einem Koksofen ist.

3. Verfahren zum Modifizieren eines mineralischen Rohmaterials nach einem der Ansprüche 1 bis 2, wobei das superabsorbierende Polymer Natriumpolyacrylat ist.

4. Verfahren zum Modifizieren eines mineralischen Rohmaterials nach einem der Ansprüche 1 bis 2, wobei das Tensid ein anionisches Tensid ist.

**Revendications**

1. Procédé de modification d'une matière première minérale par ajout d'un modificateur à la matière première minérale, comprenant des étapes de :

mesure en continu d'une teneur en humidité et une quantité de la matière première minérale transportée, la matière première minérale transportée contenant de l'humidité ;
calcul d'une quantité du modificateur à ajouter, sur la base de la teneur en humidité et de la quantité de la matière première minérale transportée ; et

ajout du modificateur dans la quantité à ajouter, à la matière première minérale, dans lequel un ajout du modificateur empêche au moins l'un quelconque parmi l'adhérence de la matière première minérale à l'équipement de traitement, le bouchage de l'équipement de traitement avec la matière première minérale, l'éjection de la matière première minérale dans l'équipement de traitement et hors de l'équipement de traitement, et une diminution de la densité apparente de la matière première minérale, dans lequel

la matière première minérale est du charbon et le procédé comprend l'ajout d'un tensioactif en tant que modificateur à du charbon possédant une teneur en humidité de 10,5 % en masse ou plus,

ou

la matière première minérale est du minerai de fer et le procédé comprend l'ajout d'un polymère superabsorbant défini dans JIS K7223 (1996) et JIS K7224 (1996) ou d'un tensioactif en tant que modificateur au minerai de fer ayant un diamètre de grain de 0,1 $\mu$m à 2 mm et une teneur en humidité de 10 % en masse ou plus.

2. Procédé de modification d'une matière première minérale selon la revendication 1, dans lequel l'équipement de traitement est au moins l'un quelconque parmi une tuyauterie, un convoyeur à bande, une chaîne de convoyeur, une goulotte, une trémie, un silo, et un four à coke.

3. Procédé de modification d'une matière première minérale selon l'une quelconque des revendications 1 à 2, dans lequel le polymère superabsorbant est un polyacrylate de sodium.

4. Procédé de modification d'une matière première minérale selon l'une quelconque des revendications 1 à 2, dans lequel le tensioactif est un tensioactif anionique.

# Fig. 1

APPARATUS FOR
MEASURING MOISTURE
CONTENT

FLOW OF MINERAL
RAW MATERIAL

BELT CONVEYOR

MODIFIER

# Fig. 2

APPARATUS FOR MEASURING
AMOUNT CONVEYED

APPARATUS FOR
MEASURING MOISTURE
CONTENT

BELT CONVEYOR

FLOW OF MINERAL
RAW MATERIAL

MODIFIER

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000065334 A
- JP 6303308 B
- JP 2018058017 A
- JP 2018127709 A
- JP 2010077368 A